(19) Europäisches Patentamt / European Patent Office / Office européen des brevets

(11) **EP 2 144 703 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: **08734977.5**

(22) Anmeldetag: **03.04.2008**

(51) Int Cl.:
***B05B 7/00*** *(2006.01)*          ***B05B 7/04*** *(2006.01)*
***B29C 41/08*** *(2006.01)*          ***B29C 67/24*** *(2006.01)*

(86) Internationale Anmeldenummer:
**PCT/EP2008/002635**

(87) Internationale Veröffentlichungsnummer:
**WO 2008/122400 (16.10.2008 Gazette 2008/42)**

(54) **VERFAHREN UND VORRICHTUNG ZUR HERSTELLUNG VON FORMTEILEN MIT EINER SCHICHT AUS POLYURETHAN**

METHOD AND DEVICE FOR THE PRODUCTION OF MOULDED PIECES FROM A LAYER OF POLYURETHANE

PROCÉDÉ ET DISPOSITIF DE FABRICATION DE PIÈCES MOULÉES POURVUES D'UNE COUCHE DE POLYURÉTHANNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.04.2007 DE 102007016785**

(43) Veröffentlichungstag der Anmeldung:
**20.01.2010 Patentblatt 2010/03**

(73) Patentinhaber: **Hennecke GmbH**
**51379 Leverkusen (DE)**

(72) Erfinder:
• **PAWLIK, Wolfgang**
**50735 Köln (DE)**
• **OBELOER, Dominik**
**41352 Korschbroich (DE)**
• **KLEBA, Ingo**
**52062 Aachen (DE)**

(74) Vertreter: **Gosdin, Michael**
**Adam-Stegerwald-Strasse 6**
**97422 Schweinfurt (DE)**

(56) Entgegenhaltungen:
**US-A- 4 019 720     US-A1- 2005 133 610**

EP 2 144 703 B1

**Beschreibung**

Die Erfindung betrifft ein Verfahren und eine Vorrichtung zur Herstellung von Formteilen enthaltend eine Schicht aus Polyurethan im Schussbetrieb, bei dem in den Strömungskanal der Sprüheinrichtung an mindestens zwei Positionen ein Gasstrom eingeleitet wird.

Wenn es darum geht, Reaktivkunststoff, z.B. Polyurethan flächig auf ein Substrat aufzubringen, hat sich zumeist das Sprühen als Auftragstechnik durchgesetzt. Dabei werden bei hochreaktiven Rohstoffsystemen, insbesonders im Schussbetrieb so genannte Hochdruckmischer verwendet, denen dann spezielle Sprühdüsen nachgeschaltet sind. Ein Beispiel für solche Sprühsysteme wird in der US 2005/133610 bzw. in der EP 0 303 305 B1 beschrieben.

Da solche Sprühmischköpfe in der Regel von einem Roboter geführt werden, welcher extrem schnelle Bewegungen ausführen muss, ist es von großem Vorteil, wenn diese Sprühmischköpfe klein und damit auch leicht gebaut sind.

Bei dreidimensionalen Sprühschichten, insbesonders bei Formteilen mit engen Vertiefungen und mit Hinterschnitten, wie z.B. bei Hautelementen für die Autoindustrie, stoßen jedoch selbst miniaturisierte Sprühmischköpfe an ihre Grenzen.

Ein besonders wichtiges Kriterium für einen optimalen Sprühprozess sind Schussunterbrechungen, denn je komplizierter ein Formteil ist, umso öfter muss der Mischkopf neu positioniert werden, um einwandfreie Sprühschichten mit der jeweils gewünschten Sprühschichtdicke und optimaler Oberfläche zu erhalten.

Nach solchen notwendigen Schussunterbrechungen muss das Sprühsystem jedoch voll funktionsfähig bleiben, d.h. das Austrags- bzw. Sprühorgan darf sich nicht während einer Schussunterbrechung mit Reaktivgemisch zusetzen.

Es bestand somit die Aufgabe, ein Verfahren und eine Vorrichtung zur Herstellung von Formteilen enthaltend eine Schicht aus Polyurethan im Schussbetrieb bereit zu stellen, bei dem das eingesetzte Sprühsystem ermöglicht, dass

- einwandfreie Sprühschichten auch bei engen Vertiefungen und bei Hinterschnitten im Formteil herstellbar sind und

- sich bei Schussunterbrechungen das Austrags- bzw. Sprühorgan nicht mit Reaktivgemisch zusetzt.

Die Erfindung betrifft ein Verfahren zur Herstellung von Formteilen enthaltend eine Schicht aus Polyurethan im Schussbetrieb, bei dem

   a) zunächst die Reaktivkomponenten Polyol und Isocyanat in einem Mischkopf vermischt werden und anschließend

   b) das in Schritt a) erzeugte Reaktivgemisch durch den Strömungskanal einer Sprüheinrichtung geleitet wird und

   c) das aus der Sprüheinrichtung austretende Reaktivgemisch auf die Oberfläche eines Substrats aufgesprüht wird und darauf aushärtet,
   dadurch gekennzeichnet, dass

   d) in den Strömungskanal der Sprüheinrichtung an mindestens zwei Positionen ein Gasstrom eingeleitet wird, wobei der Abstand 1 zwischen diesen beiden Positionen so gewählt ist, dass der Quotient aus dem Abstand 1 und dem Durchmesser d des Strömungskanals der Sprüheinrichtung

$$\left(\frac{l}{d}\right)_{max} > 10,$$ bevorzugt > 15, besonders bevorzugt > 20 ist.

Für den Fall von mehr als zwei Positionen bzw. Zuleitungen, an denen ein Gasstrom eingeleitet wird, ist der Abstand 1 der Abstand der am weitesten voneinander entfernten Positionen bzw. Zuleitungen.

Die Sprüheinrichtung kann dabei beispielsweise eine Sprühlanze oder ein Sprührüssel oder eine andere geeignete Einrichtung zum Versprühen von Polyurethan-Reaktivgemisch sein.

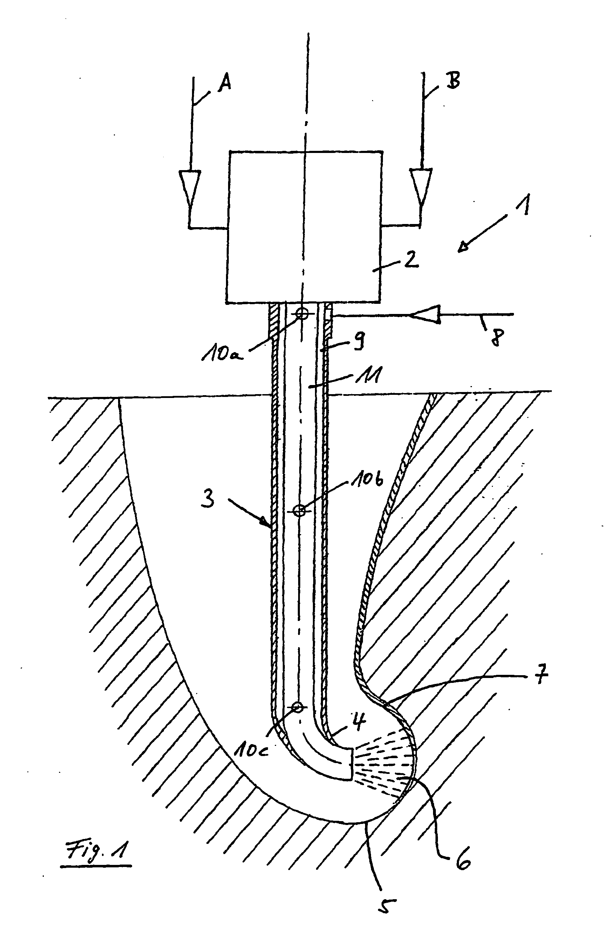

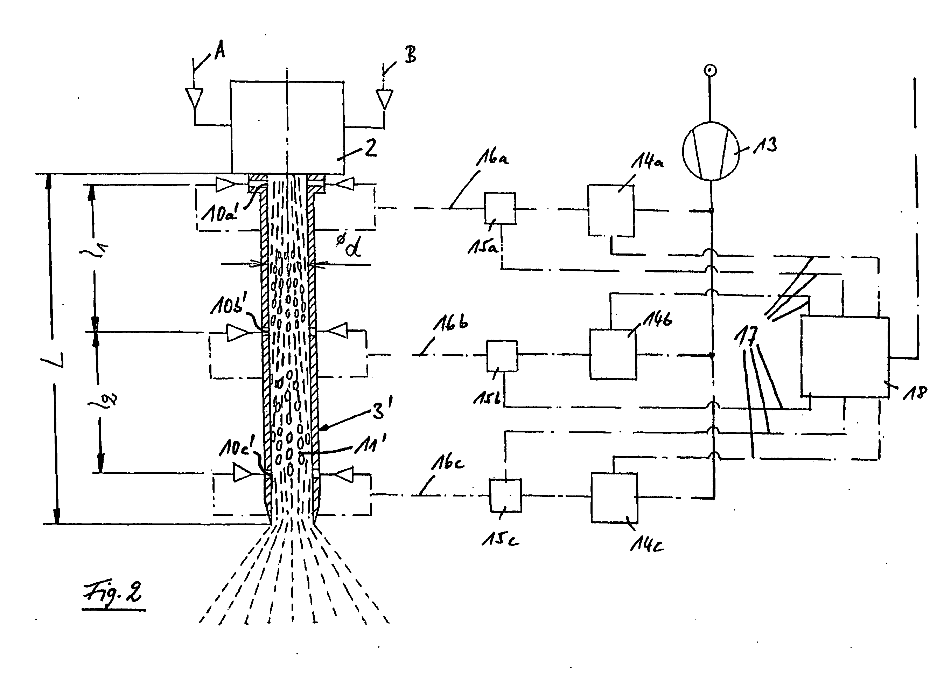

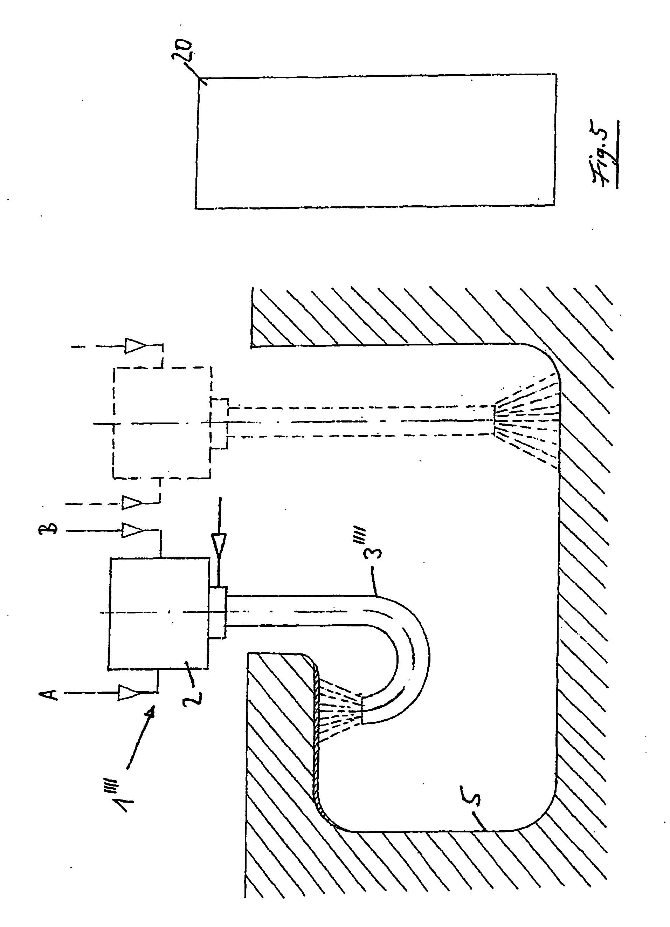

Die Figuren 1, 2 und 5 zeigen beispielhaft die Lösung für die beschriebene Aufgabenstellung. Sie veranschaulichen ein Verfahren zur Herstellung von Formteilen enthaltend eine Schicht aus Polyurethan im Schussbetrieb. Dabei werden zunächst die Reaktivkomponenten in einem Mischkopf vermischt und anschließend das so erzeugte Reaktivgemisch durch den Strömungskanal einer Sprühlanze (Fig. 2) oder eines Sprührüssels (Fig. 1 und 5) geleitet und das aus der Sprühlanze oder aus dem Sprührüssel austretende Reaktivgemisch auf die Oberfläche eines Substrats aufgesprüht, worauf es aushärtet, wobei in den Strömungskanal der Sprühlanze bzw. des Sprührüssels an mindestens zwei Positionen jeweils ein Gasstrom eingeleitet wird.

Mit diesem neuen Verfahren werden die in der Aufgabenstellung beschriebenen Kriterien für die Herstellung von Formteilen enthaltend eine Schicht aus Polyurethan im Schussbetrieb voll und ganz erfüllt.

Denn durch die nahezu beliebige Gestaltung des Austragsorgans als Sprühlanze oder auch als Sprührüssel ist es möglich, auch bei engen Vertiefungen und/oder bei Hinterschnitten in einem Formteil einwandfreie Sprühschichten herzustellen. Dies zeigt sich beispielsweise auch anhand der Figuren 1 und 5.

Die Einleitung eines Gasstromes in den Strömungskanal der Sprühlanze bzw. des Sprührüssels an mindestens zwei Positionen bewirkt zunächst einmal, dass sich das Reaktivgemisch zu einem Strom von Sprühtröpfchen zerteilt, dann aber auch, dass diese Sprühtröpfchen durch den Strömungskanal über seiner gesamten Länge transportiert werden. Dies wird bevorzugt dadurch erreicht, dass der Gasstrom im Vergleich zum Flüssigkeitsstrom ausreichend groß ist. Andererseits darf der Gasstrom auch nicht zu groß eingestellt werden, da dann die Gefahr besteht, dass das aufgesprühte Reaktionsgemisch teilweise durch den starken Luftstrom weggeblasen wird. Daher beträgt das Massenverhältnis an eingebrachtem Gasstrom zu dem aus dem Mischkopf ausgetragenen Strom an Reaktivgemisch in einem Bereich zwischen 0,002 bis 0,1, bevorzugt zwischen 0,004 bis 0,05, und besonders bevorzugt zwischen 0,006 bis 0,03.

Ein weiterer wesentlicher Effekt der Gaseinleitung an mindestens zwei Positionen des Strömungskanals besteht darin, dass auch bei Schussunterbrechungen, d.h. bei Stopp des Reaktivgemischs, jedoch unter Aufrechterhaltung der Gaseinleitung an den mindestens zwei Positionen des Strömungskanals, dieser über seiner gesamten Länge von Reaktivgemisch frei geblasen wird und somit für den weiteren Sprühprozess voll funktionsfähig bleibt.

Der wesentliche Vorteil einer mehrstufigen Gaseinleitung besteht darin, dass die beiden Aufgaben

- Gutes Sprühbild mit guter Masseverteilung sowie

- Reinhaltung der Sprühlanze

wesentlich flexibler und besser gelöst werden können. Bei einer einstufigen Gaseinleitung besteht nämlich bei längeren Sprühlanzen das Problem, dass die feinen Tröpfchen, welche sich zunächst aufgrund der ersten Gasinjektion bilden, wieder zu gröberen Tropfen koaleszieren, und dass andererseits im hinteren Bereich der Sprühlanze Reaktionsgemisch an den Wandungen kleben bleibt und sich die Sprühlanze so bei längerem Betrieb zumindest soweit zusetzt, dass der Sprühstrahl beeinträchtigt wird. Beide Effekte lassen sich zwar prinzipiell dadurch vermeiden, dass die Gasmenge an der einen Injektionsstelle erhöht wird. Leider führt dies dazu, dass aufgrund des starken Luftstroms die Sprühschicht teilweise weggeblasen wird, so dass kein gleichmäßiger Sprühauftrag mehr erreicht wird und die Masseverteilung nicht mehr den Anforderungen entspricht. Bei einer mehrstufigen Gaszugabe läßt sich das Zusammenspiel dieser Effekte dagegen wesentlich besser aussteuern bzw. optimieren.

Die Vorteile der Gaseinleitung an mindestens zwei Positionen des Strömungskanals kommen dabei aber nur zur Wirkung, wenn die beiden äußersten Gasinjektionsstellen (also die erste hinter der Mischzone und die letzte vor dem Austritt aus der Sprüheinrichtung) einen bestimmten Mindestabstand aufweisen. Es nützt nichts, wenn diese sehr eng beieinander liegen, da diese dann von ihrem verfahrenstechnischen Effekt im Prinzip wie eine einzige Gasinjektion wirken. Deshalb wird eine verfahrenstechnische Kennzahl zur Definition des Mindestabstands der beiden äußeren Gasinjektionsstellen (also der ersten hinter der Mischzone sowie der letzten vor dem Austritt aus der Sprüheinrichtung) eingeführt.

Diese Kennzahl $\left(\dfrac{l}{d}\right)_{max}$ setzt den axialen Abstand der Gasinjektionsstellen ins Verhältnis zum inneren Durchmesser der Sprüheinrichtung. Für den Fall, dass die Geometrie des Strömungskanals der Sprüheinrichtung von der eines durchgehenden, stufenlosen, zylindrischen Bereiches abweicht (z.B. bei einem konischen Verlauf oder bei mehreren zylindrischen Bereichen mit unterschiedlichen Durchmessern), berechnet sich der Referenzdurchmesser d aus der Formel $d = \sqrt{\dfrac{4 \cdot V}{\pi \cdot l}}$ . Dies entspricht dem Durchmesser, den ein durchgeghender, stufenloser, zylindrischer Bereich mit dem gleichen Volumen und der gleichen Länge wie der tatsächliche Strömungskanal zwischen den beiden äußersten Gasinjektionsstellen hätte. Dabei entspricht V dem Volumen der Strömungskanals zwischen den beiden äußersten Gasinjektionsstellen und 1 dem Abstand zwischen diesen beiden Gasinjektionsstellen.

In der weiteren Ausgestaltung dieses neuen Verfahrens erfolgt die erste Gaseinleitung in den Strömungskanal der Sprühlanze bzw. des Sprührüssels im Bereich des Eintritts des Reaktivgemischs in den Strömungskanal und die letzte Gaseinleitung in unmittelbarer Nähe des Austritts des Reaktivgemischs aus dem Strömungskanal, d.h. der Abstand der letzten Gaseinleitung zum Austrittsquerschnitt beträgt bevorzugt ca. zwischen 3 und 50 mm, besonders bevorzugt zwischen 5 und 40 mm und ganz besonders bevorzugt zwischen 8 und 30 mm.

Diese Maßnahme bewirkt deshalb nicht nur eine besonders effektive Reinhaltung des Strömungskanals über seiner gesamten Länge, sie ermöglicht auch die Minimierung des eingeleiteten Gasvolumens und damit einen aerosolarmen Sprühstrahl, d.h. einen Sprühstrahl nahezu ohne schädlichen Sprühnebel. Des Weiteren hat dieser Sprühstrahl mit dem minimierten Gasstrom über seiner gesamten Breite eine nahezu konstante Masseverteilung.

Das alles hat produktionstechnisch große Vorteile:

Dadurch kann der Sprühstart, ob beim allerersten Schussanfang oder nach einer Schussunterbrechung nahezu verlustfrei unmittelbar am Rand eines Formteils erfolgen. Des Weiteren sind mit solchen Sprühstrahlen einlagige Beschichtungen möglich. Das wiederum bewirkt minimierten Rohstoffeinsatz und minimierte Taktzeiten.

Das Verfahren kann dahingehend erweitert werden, dass auch an Zwischenpositionen weitere Gaseinleitungen erfolgen. Das ermöglicht - je nach Reaktivität des Reaktivgemischs - Sprühlanzen- bzw. Sprührüssellängen bis zu 1000 mm. Dabei liegen die Grenzen weniger im verfahrenstechnischen als im chemischen Bereich. Denn natürlich muss die Verweilzeit des Reaktivgemischs im gesamten Misch- und Sprühsystem deutlich kleiner sein als die chemisch bedingte Startzeit des Reaktivgemischs.

Die Distanz zwischen den einzelnen Gaseinleitungen wird durch die verfahrenstechnische Kennzahl

$$\left(\frac{li}{d}\right) opt.$$

definiert. Das Maß $l_i$ stellt dabei den axialen Abstand zwischen zwei benachbarten Gasinjektionsstellen und das Maß d den Referenzdurchmesser in diesem Abschnitt dar. Dabei berechnet sich der Referenzdurchmesser d für den Fall, dass die Geometrie des Strömungskanals der Sprüheinrichtung von der eines durchgehenden, stufenlosen, zylindrischen Bereiches abweicht (z.B. bei einem konischen Verlauf oder bei mehreren zylindrischen Bereichen mit unterschiedlichen Durchmessern), erneut aus der Formel $d = \sqrt{\dfrac{4 \cdot V}{\pi \cdot l}}$ . Dies entspricht wiederum dem Durchmesser, den ein durchgehender, stufenloser, zylindrischer Bereich mit dem gleichen Volumen und der gleichen Länge wie der tatsächliche Strömungskanal zwischen zwei benachbarten Gasinjektionsstellen hätte. Dabei entspricht V dem Volumen der Strömungskanals zwischen den benachbarten Gasinjektionsstellen und 1 dem Abstand zwischen diesen beiden Gasinjektionsstellen.

Diese Kennzahl liegt in Abhängigkeit vom eingesetzten Rohstoffsystem in einem Bereich zwischen 5 und 100, bevorzugt zwischen 7 und 70 und besonders bevorzugt zwischen 10 und 50. Für niedrig aktive Rohstoffsysteme kann für eine erste Abschätzung von einer Kennzahl 40 und für höher aktive Rohstoffsysteme von einer Kennzahl 20 ausgegangen werden. Die optimale Kennzahl lässt sich am besten empirisch ermitteln. Kriterien sind dabei einerseits die Reinhaltung der Sprühlanze sowie andererseits die Qualität des Sprühauftrags.

Ein zu kleiner Abstand führt insbesondere bei längeren Lanzen zu einer großen Anzahl sehr kleiner Lufteintrittsöffnungen. Da die einzelnen Lufteintrittsöffnungen aber in der Regel nur aus einem Druckluftreservoir (z.B. dem Leitungsnetz, ggf. mit dahintergeschaltetet Druckminderventilen) gespeist werden, besteht die Gefahr, dass die einzelnen Injektionsstellen sehr ungleichmäßig durchströmt werden, und sich einzelne Löcher zusetzen. Rein theoretisch liesse sich zwar auch jeder einzelne Gasstrom einzeln regeln, dies wäre jedoch bei vielen Gaseintrittsöffnungen natürlich sehr aufwändig. Außerdem ist auch die Wirkung vieler relativ impulsarmer Gasinjektionsstrahlen bezüglich der Tröpfchenerzeugung schlechter als die von einer kleineren Anzahl, dafür aber impulsbeladeneren Gasinjektionsstrahlen.

Ein zu großer axialer Abstand der einzelnen Injektionsstellen wiederum führt dazu, dass zu viel Luft zugegeben werden muss, um die Lanze während des Sprühens sauber zu halten. Das hat jedoch negative Eigenschaften auf den Sprühauftrag, da der große Luftstrom dann das aufgesprühte Material teilweise wegbläst, so dass sich Wellen ausbilden.

Wenn die Gaseinleitungen in den Strömungskanal der Sprühlanze bzw. des Sprührüssels tangential erfolgen, so verbessert das nochmals die Sprühtröpfchenbildung und den Transport der Sprühtröpfchen sowie die Reinhaltung des gesamten Sprühsystems.

In einer weiteren Ausgestaltung dieses neuen Verfahrens sind die Gasströme der Gaseinleitungen einstellbar bzw. regelbar. Auf diese Weise können bei einer Änderung des Massestroms an Reaktivgemisch auch die Gasströme entsprechend angepasst werden.

In einer speziellen Variante sind die einzelnen Gasströme getrennt voneinander einstellbar bzw. regelbar. Das ist deshalb von besonderer Bedeutung, weil alle eingeleiteten Gasströme zusammen mit den Sprühtropfen des Reaktivgemischs durch die Austrittsöffnung des Strömungskanals strömen und dadurch die Austrittsgeschwindigkeit des Sprühstrahls bewirken. Dieser wiederum muss nicht nur aerosolarm, sondern auch impulsarm sein, so dass die nach dem Auftragen noch flüssige Sprühschicht durch den Sprühstrahl selbst nicht "verblasen" wird.

Das macht es sinnvoll, die Summe aller Gaseinleitungen, also den Gesamt-Gasmengenstrom, zu minimieren und die einzelnen Gaseinleitungen abzustufen, das heißt, dass z.B. der Gasstrom der ersten Gaseinleitung so hoch sein muss, dass er das in den Strömungskanal einfließende Reaktivgemisch in Tröpfchen zerteilt. Die Gasströme der weiteren Gaseinleitungen können dann ggf. deutlich kleiner sein. Sie müssen lediglich noch so groß sein, dass eine eine Koaleszenz der Sprühtröpfchen verhindert wird. Dabei kann der Gesamtvolumenstrom aller Gaseinleitungen je nach Größe des Strömungskanals und damit letztlich in Abhängigkeit von der Austragsleistung an Reaktionsgemisch in einem Bereich zwischen 5 Nl/min bis 200 Nl/min, bevorzugt zwischen 10 Nl/min bis 150 Nl/min und besonders bevorzugt zwischen 15 Nl/min bis 100 Nl/min liegen. Dabei bedeutet die Bezeichnung 1 N1 (Normliter), also das Gasvolumen von 1 Liter bei 20°C und 1,013 bar absolutem Druck.

Bei Installation von Druckindikatoren in die Leitungen für die Gasströme kann auch die Funktionsfähigkeit, d.h. die Reinheit des Strömungskanals der Sprühlanze bzw. des Sprührüssels überwacht werden. Denn wenn bei konstantem Gasstrom ein Druckanstieg auftritt, so ist das ein Anzeichen für ein Anhaften von ausreagiertem Reaktivgemisch im Strömungskanal.

Prinzipiell genügt es, einen Druckindikator in die Leitung der ersten Gaseinleitung zu installieren. Wenn jedoch in jeder Gasleitung ein Druckindikator vorhanden ist, kann differenziert werden, welcher Bereich des Strömungskanals besonders betroffen ist.

Bei Sprühschichten, wie z.B. in Figur 5 dargestellt, ist es nicht möglich, diese mit einem einzigen Sprührogan herzustellen. Hierbei muss während eines Sprühzyklus entweder das Sprührogan gewechselt werden, was mit einer Sprühlanze- bzw. Sprührüsselwechselstation erfolgen kann oder es sind zumindest zwei Sprühmischköpfe mit entsprechenden Sprührorganen einem solchen Formwerkzeug zugeordnet, die je nach Platzverhältnissen entweder gleichzeitig oder wechselweise sprühen.

Eine besonders effektive Maßnahme, den Strömungskanal der Sprühlanze bzw. des Sprührüssels funktionsfähig, d.h. sauber zu halten, besteht darin, bei Schussunterbrechungen und insbesonders nach Schussende die Gasstöme zu pulsen, d.h. den Gasstrom über den für den Sprühprozess erforderlichen Wert hinaus pulsierend ansteigen zu lassen.

In einer vorteilhaften Ausgestaltung des Verfahrens ist der Strömungskanal in mehrere Bereiche mit jeweils unterschiedlichen Durchmessern aufgeteilt. Auch hier berechnet sich der Referenzdurchmesser d wieder aus der Formel $d = \sqrt{\dfrac{4 \cdot V}{\pi \cdot l}}$ . Dies entspricht wiederum dem Durchmesser, den ein durchgegehender, stufenloser, zylindrischer Bereich mit dem gleichen Volumen und der gleichen Länge wie der tatsächliche Strömungskanal zwischen zwei benachbarten Gasinjektionsstellen hätte. Dabei entspricht V dem Volumen der Strömungskanals zwischen den benachbarten Gasinjektionsstellen und 1 dem Abstand zwischen diesen beiden Gasinjektionsstellen.

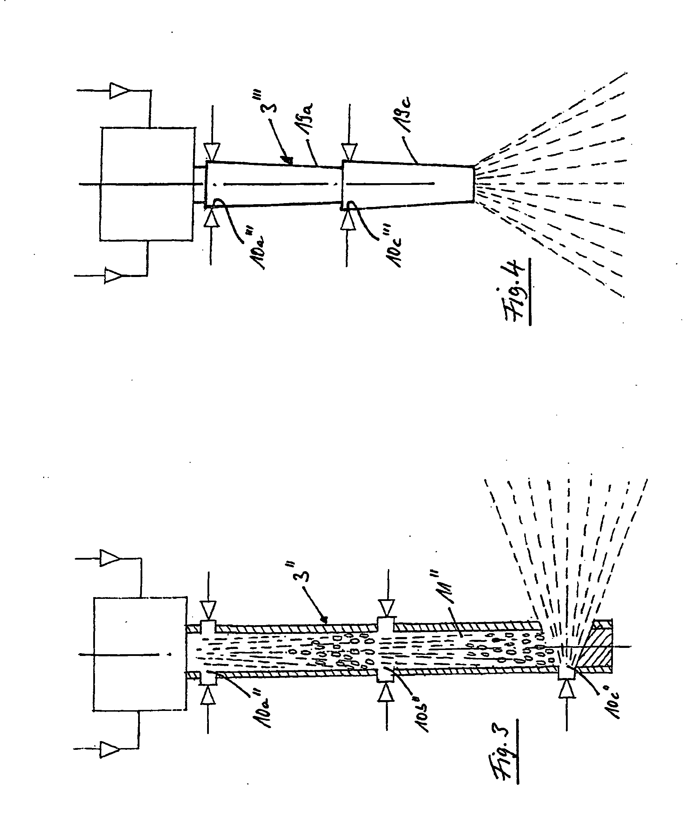

In einer besonders vorteilhaften Ausgestaltung wird der Durchmesser von Bereich zu Bereich in Richtung Austrittsöffnung immer größer. Dadurch ist es möglich, im ersten Teil der Sprühlanze mit einem relativ impulsbeladenen Strom eine relativ große Distanz zu überwinden. Der Impuls wird dann durch die Querschnittserweiterungen reduziert. Vorteilhafterweise werden, ähnlich wie in Figur 4 dargestellt, hinter diesen Querschnittserweiterungen Gasinjektionsstellen angeordnet, da sich dadurch Totzonen in diesen Bereichen vermeiden lassen.

Die Erfindung betrifft auch eine Vorrichtung zur Herstellung von Formteilen enthaltend eine Schicht aus Polyurethan im Schussbetrieb, enthaltend:

a) Vorratsbehältern und Dosieraggregate für die Reaktivkomponenten Polyol und Isocyanat,

b) einen Mischkopf zur Vermischung der Reaktivkomponenten,

c) Verbindungsleitungen von den Vorratsbehältern zu den Dosieraggregaten und von den Dosieraggregaten zu dem Mischkopf,

d) eine Sprüheinrichtung enthaltend einen mit dem Mischkopf hydraulisch verbundenen Strömungskanal,

dadurch gekennzeichnet, dass sie weiterhin enthält

e) eine im Eintrittsbereich des Strömungskanals angeordnete erste Zuleitung für die Einleitung eines ersten Gasstroms in den Strömungskanal,

f) eine im Austrittsbereich des Strömungskanals angeordnete zweite Zuleitung für die Einleitung eines zweiten Gasstroms in den Strömungskanal, wobei die erste Zuleitung und die zweiten Zuleitung im Abstand 1 zueinander angeordnet sind, so dass der Quotient aus dem Abstand 1 und dem Durchmesser d des Strömungskanals der Sprüheinrichtung

$$\left(\frac{l}{d}\right)_{max} > 10,\ \text{bevorzugt} > 15, \text{besonders bevorzugt} > 20 \text{ ist.}$$

Für den Fall von mehr als zwei Positionen bzw. Zuleitungen, an denen ein Gasstrom eingeleitet wird, ist der Abstand 1 der Abstand der am weitesten voneinander entfernten Positionen bzw. Zuleitungen.

Dabei wird unter dem Eintrittsbereich des Strömungskanals der Bereich verstanden, der im Bereich der ersten 20% der Gesamtlänge des Strömungskanals bezogen auf die zum Mischkopf hin gerichtete Eintrittsöffnung des Strömungskanals liegt. Entsprechend wird unter dem Austrittsbereich des Strömungskanals der Bereich verstanden, der im Bereich der letzten 20% der Gesamtlänge des Strömungskanals bezogen auf die zum Mischkopf hin gerichtete Eintrittsöffnung des Strömungskanals liegt.

Die Gaszuführung in den Strömungskanal wird ermöglicht durch die Bereitstellung einer Gasquelle oder eines Kompressors und von Verbindungsleitungen von der Gasquelle oder dem Kompressor zu der ersten und der zweiten Zuleitung in den Strömungskanal.

Die Sprüheinrichtung kann dabei beispielsweise eine Sprühlanze oder ein Sprührüssel oder eine andere geeignete Einrichtung zum Versprühen von Polyurethan-Reaktivgemisch sein.

Als Mischköpfe werden bei der Anwendung im Schussbetrieb so genannte Hochdruckmischköpfe verwendet, in der Regel schiebergesteuerte Mischköpfe, bei denen die Umsteuerung von Rezirkulations- auf Schussbetrieb mittels eines Steuerschiebers erfolgt, der auch gleichzeitig Reinigungsorgan für die Mischkammer ist.

Der Strömungskanal der Sprühlanze bzw. des Sprührüssels schließt sich unmittelbar an die Mischkammer an, wobei die erste Einleitung eines Gasstroms in den Strömungskanal direkt am Anfang des Strömungskanals erfolgt. Das hat den Vorteil, dass bei Schussunterbrechungen bzw. nach Schussende nicht nur der Strömungskanal, sondern auch die Stirnseite des vorne, d.h. in Reinigungsposition stehenden Steuerschiebers mit der Blasluft frei geblasen werden kann.

Die beim Sprühen verwendeten Drücke liegen je nach Rohstoffsystem, d.h. je nach Reaktivität und Viskosität des Reaktivgemischs bei ca. 0,2 bis 50 bar, vorzugsweise bei 0,3 bis 30 bar, besonders bevorzugt bei 0,5 bis 10 bar. Dadurch ist es möglich, auch mit einem längeren Sprühkanal Tropfengrößen deutlich unterhalb von 100 $\mu$m zu erzeugen. Messtechnisch erfassen lässt sich die Tropfengrößenverteilung z.B. mit dem Spraytec-Laser-Beugungsspektrometer der Firma Malvern.

Die beim Reinigungsblasen verwendeten Drücke liegen bei 1,0 bis 100 bar, vorzugsweise bei 2,0 bis 50 bar, besonders bevorzugt bei 3,0 bis 20 bar.

Als Gas wird in der Regel Druckluft sowohl für das Sprühen als auch für das Reinigungsblasen verwendet. Ebenso können aber andere Inertgase wie z.B. Stickstoff verwendet werden. Denkbar ist aber auch speziell beim Reinigungsblasen dem Gasstrom Feststoffartikel oder Flüssigkeitstropfen beizumischen, um z.B. bei extrem hochreaktiven Rohstoffsystemen den erforderlichen Reinigungseffekt sicherzustellen.

Die letzte Einleitung eines Gasstroms in den Strömungskanal erfolgt bevorzugt in unmittelbarer Nähe des Austritts des Reaktivgemischs aus dem Strömungskanal der Sprühlanze bzw. des Sprührüssels, d.h. ca. 3,0 bis 50,0 mm, bevorzugt 5,0 bis 40,0 mm, besonders bevorzugt 8,0 bis 30,0 mm vor dem Ende des Strömungskanals.

Bei Sprühlanzen- bzw. Sprührüssellängen, die größer als 200 mm sind, ist es sinnvoll, zwischen erster und letzter Gaseinleitung an Zwischenpositionen weitere Gaseinleitungen anzuordnen.

Denn wenn die Distanz zwischen den einzelnen Gaseinleitungen zu groß wird, koaleszieren die Sprühtröpfchen, wodurch der Transport der Sprühtropfen durch den Strömungskanal erheblich beeinträchtigt wird.

Der Abstand zwischen den einzelnen Gaseinleitungen ist durch die verfahrenstechnische Kennzahl

$$\left(\frac{li}{d}\right) opt .$$

defniert. Diese liegt in Abhängigkeit vom eingesetzten Rohstoffsystem bevorzugt in einem Bereich von zwischen 5 und 100, besonders bevorzugt zwischen 7 und 70 und ganz besonders bevorzugt zwischen 10 und 50. Für niedrig aktive Rohstoffsysteme kann für eine erste Abschätzung von einer Kennzahl 40 und für höher aktive Rohstoffsysteme von einer Kennzahl 20 ausgegangen werden.

Als Durchmesser $d$ für den Strömungskanal kann je nach Austragsmenge, Viskosität und Reaktivität des Reaktivgemischs sowie je nach erforderlicher Gesamtlänge $L$ des Strömungskanals von 2,0 bis 30,0 mm, vorzugsweise von 3,0 bis 20,0 mm, besonders bevorzugt von 4,0 bis 10,0 mm ausgegangen werden.

Welcher Durchmesser $d$ letztendlich zu wählen ist, kann nur in einem Praxisversuch abgeklärt werden, der je nach Rohstoffsystem, Auftragsmenge sowie Strömungskanallänge nur einmal durchzuführen ist.

Vorteihaft ist aber auch eine Sprühlanze mit mehreren zylindrischen Bereichen mit jeweils unterschiedlichen Durchmessern. In einer besonders vorteilhaften Ausgestaltung wird der Durchmesser von Bereich zu Bereich in Richtung Austrittsöffnung immer größer. Dadurch ist es möglich, im ersten Teil der Sprühlanze mit einem relativ impulsbeladenen Strom eine relativ große Distanz zu überwinden. Der Impuls wird dann durch die Querschnittserweiterungen reduziert. Vorteilhafterweise werden, ähnlich wie in Figur 4 dargestellt, hinter diesen Querschnittserweiterungen Gasinjektionsstellen angeordnet, da sich dadurch Totzonen in diesen Bereichen vermeiden lassen. Auch hier berechnet sich der Referenzdurchmesser d wieder aus der Formel

$$d = \sqrt{\frac{4 \cdot V}{\pi \cdot l}}$$ . Dies entspricht wiederum dem Durchmesser, den ein durchgehender, stufenloser, zylindrischer Bereich mit dem gleichen Volumen und der gleichen Länge wie der tatsächliche Strömungskanal zwischen zwei benachbarten Gasinjektionsstellen hätte. Dabei entspricht V dem Volumen der Strömungskanals zwischen den benachbarten Gasinjektionsstellen und 1 dem Abstand zwischen diesen beiden Gasinjektionsstellen.

Die Einlassöffnungen für die Gaseinleitungen in den Strömungskanal der Sprühlanze bzw. des Sprührüssels können tangential angeordnet sein. Das verbessert die Sprühtropfenbildung und damit auch den Transport der Sprühtropfen, aber auch die Reinhaltung des gesamten Sprühsystems. Jede Injektionsstelle kann auch aus mehreren Einlassöffnungen bestehen, die dann bevorzugt gleichmäßig über den Umfang verteilt angeordnet sind. Denkbar ist auch, dass die einer Injektionsstelle zugehörigen Einlassöffnungen axial leicht versetzt angeordnet sind.

In einer weiteren Ausgestaltung der neuen Vorrichtung sind in den Gas-Verbindungsleitungen zwischen Gasquelle und den Zuleitungen der Gasströme in den Strömungskanal der Sprühlanze bzw. des Sprührüssels Stellorgane zur Einstellung der jeweiligen Gasmenge angeordnet. Damit ist es möglich, bei sich ändernder Austragsmenge an Reaktivgemisch auch die Gasmenge entsprechend anzupassen.

Es ist weiterhin möglich, die Gasströme der einzelnen Gas-Verbindungsleitungen entsprechend den verfahrenstechnischen Erfordernissen gestuft einzustellen, das heißt zum Beispiel, dass bei zwei Gas-Verbindungsleitungen die erste 60 bis 80 % des gesamten Gasvolumenstroms erhält und die zweite Gas-Verbindungsleitungs ca. 20 bis 40 % des gesamten Gasvolumenstroms. Auf diese Weise ist eine Minimierung des gesamten Gasvolumens möglich, was wiederum aerosol- sowie impulsarme Sprühstrahle bewirkt.

Wenn den Stellorganen Druckindikatoren nachgeordnet sind, ist es möglich, die Funktionsfähigkeit, d.h. die Reinheit des Strömungskanals der Sprühlanze bzw. des Sprührüssels zu überwachen. Denn wenn bei konstantem Gasstrom ein Druckanstieg auftritt, so ist das ein Anzeichen für ein Anhaften von ausreagiertem Reaktivgemisch im Strömungskanal.

In einer besonderen Ausgestaltung der neuen Vorrichtung werden als Stellorgane zur Gasmengenverstellung Mengenregelventile verwendet, wobei diese Mengenregelventile sowie die Druckindikatoren über Impulsleitungen (elektrischen Signalleitungen) mit einem Regelgerät verbunden sind.

Auf diese Weise ist es möglich, bei einem Ansteigen des Druckes automatisch durch Erhöhen der Gasmenge einem Zuwachsen des Strömungskanals entgegenzuwirken. Es ist selbstverständlich, dass dieser Maßnahme Grenzen gesetzt sind, denn die Gasmenge kann nur so weit erhöht werden, wie die für den Spreihprozess wichtigen Kriterien "aerosol- und impulsarmer Sprühstrahl" nicht beeinträchtigt werden.

Wenn das Regelgerät über eine weitere Impulsleitung (elektrische Signalleitung) auch mit dem Dosieraggregat verbunden ist, so kann bei einer Änderung der Austragsmenge an Reaktivgemisch automatisch auch die entsprechende Gasmenge angepasst werden.

Im Zusammenwirken mit einer Sprühlanzen- bzw. Sprührüsselwechselstation ist dann sogar ein vollautomatischer Sprühprozess möglich. Sprühlanzen bzw. Sprührüssel werden bevorzugt automatisch gewechselt, wenn

- sich eine Sprühlanze bzw. ein Sprührüssel zu sehr mit "angebackenem" Reaktivgemisch zugesetzt hat,

- die Austragsmenge an Reaktivgemisch geändert wird, z.B. bei unterschiedlich dicken Sprühschichten,

- der Sprühbeginn wegen der speziellen Kontur der Sprühschicht z.B. zunächst mit einem Sprührüssel (siehe auch Fig. 5) erfolgt und dann auf eine Sprühlanze umgerüstet werden muss.

Die Erfindung bezieht sich auch auf die Verwendung von Formteilen enthaltend eine Schicht aus Polyurethan, die mittels eines Verfahrens bzw. einer Vorrichtung hergestellt wurden, wie sie in dieser Anmeldung beschrieben werden.

Die Erfindung wird anhand der folgenden Schemata näher erläutert. Es zeigen

Figur 1　　schematisch einen Mischkopf mit Sprührüssel enthaltend einen 90°-Bogen,

Figur 2　　schematisch ein Sprühsystem mit Sprühlanze,

Figur 3　　schematisch eine spezielle Ausführung einer Sprühlanze,

Figur 4　　schematisch eine weitere spezielle Ausführung einer Sprühlanze,

Figur 5　　schematisch ein Sprühsystem mit Sprühlanzen- bzw. Sprührüssel-Wechselstation.

In Figur 1 ist eine Vorrichtung 1 enthaltend einen Mischkopf 2 und als Sprüheinrichtung einen Sprührüssel 3 enthaltend einen 90°-Bogen 4 zum Besprühen von Polyurethan-Reaktivgemisch auf ein Substrat 5 gezeigt. Die Reaktivkomponenten Polyol A und Isocyanat B werden von Vorratsbehältern über Dosieraggregate (im Schema nicht dargestellt) mittels Verbindungsleitungen zu einem Hochdruckmischkopf 2 gefördert und dort miteinander vermischt. Anschließend wird das Reaktivgemisch durch den Strömungskanal eines Sprührüssels 3 mit 90°-Bogen 4 gedrückt und in einem Sprühstrahl 6 auf das Substrat 5, hier die Werkzeugoberfläche eines Werkzeugs mit einer ausgeprägten Vertiefung und mit Hinterschnitt, d.h. einer schwer zugänglichen Vertiefung, aufgetragen.

Auf der Werkzeugoberfläche (Substrat 5) reagiert das aufgesprühte Reaktivgemisch aus, wodurch eine Haut 7 entsteht, die danach in weiteren Verarbeitungsschritten (im Schema nicht dargestellt) hinterschäumt und z.B. zu einem Formteil für die Automobilindustrie weiterverarbeitet werden kann.

In Strömungsrichtung unmittelbar hinter dem Mischkopf 2 wird ein Gasstrom 8 in den Ringkanal des Sprührüssels 3 geleitet. Vom Ringkanal 9 gelangt das Gas dann über drei Gaszuleitungen 10a, 10b, 10c in den Strömungskanal 11 des Sprührüssels 3, worin der Gasstrom das Reaktivgemisch zunächst in Sprühtröpfchen zerteilt, dann das Reaktivgemisch zum Ausgang aus dem Strömungskanal weitergeführt und anschließend versprüht wird.

In Figur 2 werden ebenfalls Reaktivkomponenten A und B von Vorratsbehältern über Dosieraggregate (im Schema nicht dargestellt) mittels Verbindungsleitungen zu einem Hochdruckmischkopf 2 gefördert und dort miteinander vermischt. Anschließend wird das Reaktivgemisch durch den Strömungskanal 11' einer als Sprühlanze 3' ausgebildeten Sprüheinrichtung gedrückt.

Unmittelbar hinter dem Mischkopf 2 erfolgt eine erste Gaseinleitung, d.h. eine im Eintrittsbereich des Strömungskanals 11' angeordnete erste Zuleitung 10a' in den Strömungskanal 11' der Sprühlanze 3'. Dadurch wird das Reaktivgemisch in Sprühtröpfchen zerteilt und in Richtung Austritt aus dem Strömungskanal gefördert.

Da die Sprühtröpfchen während des Strömens durch einen Strömungskanal zum Koaleszieren neigen, erfolgt im Abstand $l_1$ eine zweite Gaseinleitung durch die Zuleitung 10b', wodurch dem Koaleszieren der Sprühtröpfchen entgegengewirkt wird.

Im weiteren Abstand $l_2$ erfolgt dann die dritte und in diesem Beispiel die letzte Gaseinleitung 10c' durch die im Austrittsbereich des Strömungskanals 11' angeordnete Zuleitung 10c', die ebenfalls die Aufgabe hat, dem Koaleszieren entgegenzuwirken. Auf diese Weise entsteht über der Gesamtlänge $L$ des Strömungskanals eine Kaskade von Gaseinträgen, die eine feinteilige Gas/flüssig Dispersion erzeugt, die dann als Sprühstrahl aus dem Strömungskanal 11' der Sprühlanze 3' austritt. Auf diese Weise lässt sich dann auch bei längeren Strömungskanälen ein Tropfenspektrum mit Tropfengrößen unterhalb von 100 μm erzielen.

Figur 2 zeigt weiterhin einen mit einer Gasquelle verbundenen Kompressor 13, von dem aus Gasleitungen 16a, 16b, 16c über Mengenregelventile 14a, 14b, 14c und Druckindikatoren 15a, 15b, 15c zu den Gas-Zuleitungen 10a', 10b', 10c' führen. Die Druckindikatoren 15a, 15b, 15c sowie die Mengenregelventile 14a, 14b, 14c sind über Impulsleitungen 17 mit einem Regelgerät 18 verbunden.

Das Regelgerät ist mit einer weiteren Impulsleitung 19 mit der im Schema nicht dargestellten Dosiermaschine für die Reaktivkomponenten A und B verbunden. Auf diese Weise ist es möglich, bei sich ändernder Austragsmenge an Reaktivgemisch auch die in den Strömungskanal der Sprühlanze eingeleiteten Gasströme automatisch anzupassen.

Weiterhin ist es möglich, anhand der Druckindikatoren 15a, 15b, 15c den Zustand des Strömungskanals 11' zu überwachen. Setzt sich nämlich der Strömungskanal 11' mit ausreagiertem Reaktivgemisch mehr und mehr zu, so kann der Gasstrom erhöht werden, um einem Zuwachsen entgegenzuwirken. Eine Erhöhung des Gasstroms ist jedoch nur insoweit möglich, wie der Sprühstrahl dadurch nicht beeinträchtigt wird, denn der Sprühstrahl muss aerosolarm und impulsarm bleiben, um einwandfreie Sprühschichten erzeugen zu können. Wenn im Strömungskanal 11' zuviel Reaktivgemisch angebacken ist, muss die Sprühlanze 3' ausgewechselt werden. Das kann im Zusammenwirken mit der in Figur 5 schematisch dargestellten Sprühlanzen-Sprührüssel-Wechselstation vollautomatisch erfolgen.

Mittels der Druckindikatoren kann auch festgestellt werden, in welchem Bereich der Sprühlanze 3' der Strömungskanal 11' erhöhte Anbackungen an Reaktivgemisch hat. Sind nämlich die erhöhten Anbackungen im Endbereich des Strömungskanals 11', so steigt der Druck an allen drei Druckindikatoren. Sind die erhöhten Anbackungen nur im oberen Bereich des Strömungskanals 11', so steigt der Druck nur am Druckindikator 15a für die erste Gas-Zuleitung 10a'.

Bei Schussunterbrechungen bzw. nach Schussende schaltet der Mischkopf die Reaktivkomponenten auf Rezirkulation, wodurch der Dosiervorgang beendet wird.

Der Sprühvorgang wird noch eine kurze Zeit aufrecht erhalten, bis der Strömungskanal komplett frei geblasen ist.

Anschließend wird der Mischkopf 2 mit der Sprühlanze 3' in eine Reinigungsposition geschwenkt und der Gasstrom durch die Mengenregelventile 14a, 14b, 14c automatisch hochgeregelt, wodurch allerletzte Reste an Reaktivgemisch aus dem Strömungskanal 11' in einer Reinigungsstation weggeblasen werden. Die dabei entstehenden Aerosole werden durch eine Ablufteinrichtung abgesaugt.

Figur 3 zeigt eine spezielle Ausführung einer Sprühlanze 3'' mit folgenden Besonderheiten:

- Die Gas-Zuleitungen 10a'', 10b'', 10c'' in den Strömungskanal 11'' erfolgen über ringförmig um den Strömungskanal angeordnete Kanäle. Das bewirkt eine optimale Sprühtröpfchenbildung und des Weiteren eine völlig gleichmäßige, ungestörte, d.h. Totraum freie Sprühtropfen-Strömung. Des Weiteren wird auch die Reinhaltung des Strömungskanals der Sprühlanze durch die Gaseinströmung über die Kanäle begünstigt.

- Die Umlenkung des Sprühnebels um 90° im Bereich des Austritts des Strömungskanals 11'' erfolgt durch eine besonders einfache Konstruktion, die es ermöglicht, auch Hinterschnitte bei extrem engen Vertiefungen oder gar die Innenfläche eines Rohres zu besprühen.

Figur 4 zeigt eine relativ kurze Sprühlanze 3''' von ca. 100 bis 200 mm Länge mit nur zwei Gas-Zuleitungen (10a''', 10c''').

Das Besondere an dieser Ausführungsform besteht jedoch darin, dass der Strömungskanal in Abschnitte 19a, 19c unterteilt ist, die sich in Strömungsrichtung konisch (ca. 1° bis 5°) verengen.

Zunächst einmal ist diese Anordnung in ihrer Wirkweise eine spezielle Variante zur Einströmung wie in Figur 3 dargestellt.

Des Weiteren aber bewirkt die Konizität insbesonders bei tangentialer Einströmung der Gaseinleitungen einen besonders breiten Sprühstrahl.

In Figur 5 ist schematisch ein Mischkopf 2 mit einem Sprührüssel 3'''' dargestellt, der mit einem Rundbogen von 180° ausgestattet ist. Das ist in diesem speziellen Fall erforderlich, weil sich ein Teil der zu beschichtenden Oberfläche (Substrat 5) in einer Werkzeughöhlung befindet.

Die Gas-Zuleitungen in den Strömungskanal des Sprührüssels 3'''' erfolgen in diesem Beispiel genauso wie in Figur 1 dargestellt mittels eines um den Strömungskanal herum angeordneten Ringkanals (nicht dargestellt in Figur 5).

Der in Figur 5 schematisch dargestellten Sprüh-Vorrichtung 1'''' ist auch eine Sprühlanzen- bzw. Sprührüssel-Wechselstation 20 zugeordnet, die es ermöglicht, während des gesamten Sprühprozesses Sprührüssel bzw. Sprühlanzen zu wechseln, das ist in diesem speziellen Beispiel notwendig, weil nahezu jede Fläche einen separaten Sprührüssel bzw. eine separate Sprühlanze erforderlich macht.

Denkbar ist es auch, in diesem speziellen Beispiel mit zwei Mischköpfen zu operieren, die gleichzeitig oder wechselweise in Funktion sind. Das erspart zumindest die Zeiten, die bei nur einem Mischkopf für das Wechseln einer Sprüh-lanze bzw. eines Sprührüssels erforderlich sind.

Die in Figur 5 schematisch dargestellte Sprühlanzen- bzw. Sprührüsselwechselstation ermöglicht im Zusammenwirken mit der in Figur 2 dargestellten Sprühstation einen vollautomatischen Sprühprozess.

## Patentansprüche

1. Verfahren zur Herstellung von Formteilen enthaltend eine Schicht aus Polyurethan im Schussbetrieb, bei dem

   a) zunächst die Reaktivkomponenten Polyol und Isocyanat in einem Mischkopf (2) vermischt werden und anschließend

   b) das in Schritt a) erzeugte Reaktivgemisch durch den Strömungskanal (11, 11', 11", 11"', 11"") einer Sprüheinrichtung (3, 3', 3", 3"', 3"") geleitet wird und

   c) das aus der Sprüheinrichtung austretende Reaktivgemisch auf die Oberfläche eines Substrats (5) aufgesprüht wird und darauf aushärtet, **dadurch gekennzeichnet, dass**

   d) in den Strömungskanal der Sprüheinrichtung an mindestens zwei Positionen ein Gasstrom eingeleitet wird, wobei der Abstand 1 zwischen diesen beiden Positionen so gewählt ist, dass der Quotient aus dem Abstand 1 und dem Durchmesser d des Strömungskanals der Sprüheinrichtung $\left(\dfrac{l}{d}\right)_{max} > 10,$ bevorzugt > 15, besonders bevorzugt > 20 ist.

2. Verfahren nach Anspruch 1, **dadurch gekennzeichnet, dass** die erste Gaseinleitung durch eine im Eintrittsbereich des Strömungskanals angeordnete erste Zuleitung (10a, 10a', 10a", 10a"') und die zweite Gaseinleitung durch eine im Austrittsbereich des Strömungskanals angeordnete zweite Zuleitung (10c, 10c' 10c", 10c"') erfolgt.

3. Verfahren nach den Ansprüchen 1 und 2, **dadurch gekennzeichnet, dass** in den Strömungskanal der Sprüheinrichtung an mehr als zwei Positionen ein Gasstrom eingeleitet wird.

4. Verfahren nach einem der Ansprüche 1 bis 3, **dadurch gekennzeichnet, dass** die Gaseinleitung in den Strömungskanal (11, 11', 11 ", 11"', 11"") tangential erfolgt.

5. Verfahren nach einem der Ansprüche 1 bis 4, **dadurch gekennzeichnet, dass** der Strömungskanal mehrere zylindrische Bereiche mit unterschiedlichen Durchmessern besitzt.

6. Verfahren nach Anspruch 5, **dadurch gekennzeichnet, dass** der Durchmesser des Strömungskanals in Richtung Austrittsöffnung stufenweise größer wird.

7. Verfahren nach Anspruch 6, **dadurch gekennzeichnet, dass** unmittelbar hinter einer Querschnittserweiterung eine Zuleitung für die Einleitung eines Gasstroms angeordnet ist.

8. Vorrichtung zur Herstellung von Formteilen enthaltend eine Schicht aus Polyurethan im Schussbetrieb, enthaltend:

   a) Vorratsbehälter und Dosieraggregate für die Reaktivkomponenten Polyol und Isocyanat,
   b) einen Mischkopf (2) zur Vermischung der Reaktivkomponenten,
   c) Verbindungsleitungen von den Vorratsbehältern zu den Dosieraggregaten und von den Dosieraggregaten zu dem Mischkopf,
   d) eine Sprüheinrichtung (3, 3', 3", 3"', 3"") enthaltend einen mit dem Mischkopf (2) hydraulisch verbundenen Strömungskanal (11, 11', 11", 11"', 11"")
   **dadurch gekennzeichnet, dass** sie weiterhin enthält
   e) eine im Eintrittsbereich des Strömungskanals angeordnete erste Zuleitung (10a, 10a', 10a", 10a"') für die Einleitung eines ersten Gasstroms in den Strömungskanal,
   f) eine im Austrittsbereich des Strömungskanals angeordnete zweite Zuleitung (10c, 10c', 10c", 10c"') für die Einleitung eines zweiten Gasstroms in den Strömungskanal, wobei der Abstand 1 zwischen diesen beiden Positionen so gewählt ist, dass der Quotient aus dem Abstand 1 und dem Durchmesser d des Strömungskanals der Sprüheinrichtung

$$\left(\frac{l}{d}\right)_{max} > 10,$$ bevorzugt > 15, besonders bevorzugt > 20 ist.

**9.** Vorrichtung gemäß Anspruch 8, **dadurch gekennzeichnet, dass** in dem Strömungskanal (11, 11', 11", 11"', 11"") zwischen der ersten Zuleitung (10a, 10a', 10a", 10a"') und der zweiten Zuleitung (10c, 10c', 10c", 10c"') wenigstens eine weitere Zuleitung (10b, 10b', 10b") für die Einleitung eines weiteren Gasstroms angeordnet ist.

**10.** Vorrichtung gemäß einem der Ansprüche 8 oder 9, **dadurch gekennzeichnet, dass** die Zuleitungen Einlassöffnungen der Zuleitungen in den Strömungskanal tangential zum Strömungskanal angeordnet sind.

**11.** Vorrichtung gemäß einem der Ansprüche 8 bis 10, **dadurch gekennzeichnet, dass** der Strömungskanal aus mehreren zylindrischen Bereichen mit unterschiedlichen Durchmessern besteht.

**12.** Vorrichtung nach Anspruch 11, **dadurch gekennzeichnet, dass** der Durchmesser des Strömungskanals in Richtung Austrittsöffnung stufenweise größer wird.

**13.** Vorrichtung nach Anspruch 12, **dadurch gekennzeichnet, dass** unmittelbar hinter einer Querschnittserweiterung eine Zuleitung für die Einleitung eines Gasstroms angeordnet ist.

**14.** Vorrichtung gemäß einem der Ansprüche 8 bis 13, **dadurch gekennzeichnet, dass** in den Gasleitungen (16a, 16b, 16c) zu den Zuleitungen (10a, 10a', 10a", 10a"', 10b, 10b', 10b", 10c, 10c', 10c", 10c"') Stellorgane (14a, 14b, 14c) zur Einstellung des jeweiligen Gasstroms angeordnet sind.

**Claims**

**1.** Process for the production of mouldings containing a layer of polyurethane in shot operation, in which

    a) first the reactive components polyol and isocyanate are mixed in a mixing head (2) and then
    b) the reactive mixture produced in step a) is guided through the flow channel (11, 11', 11", 11"', 11"") of a spray device (3, 3', 3", 3"', 3"") and
    c) the reactive mixture leaving the spray device is sprayed onto the surface of a substrate (5) and cures thereon,
    **characterised in that**
    d) a gas stream is introduced into the flow channel of the spray device in at least two positions, wherein the distance 1 between those two positions being so chosen that the quotient of the distance 1 and the diameter d of the flow channel of the spray device

$$\left(\frac{l}{d}\right)_{max}$$

is > 10, preferably > 15, particularly preferably > 20.

**2.** Process according to claim 1, **characterised in that** the first gas introduction takes place through a first supply pipe (10a, 10a', 10a", 10a"') arranged in the inlet region of the flow channel and the second gas introduction takes place through a second supply pipe (10c, 10c', 10c", 10c"') arranged in the outlet region of the flow channel.

**3.** Process according to claims 1 and 2, **characterised in that** a gas stream is introduced into the flow channel of the spray device in more than two positions.

**4.** Process according to one of claims 1 to 3, **characterised in that** the introduction of gas into the flow channel (11, 11', 11", 11"', 11"") takes place tangentially.

**5.** Process according to one of claims 1 to 4, **characterised in that** the flow channel has a plurality of cylindrical regions having different diameters.

**6.** Process according to claim 5, **characterised in that** the diameter of the flow channel increases stepwise in the direction towards the outlet opening.

**7.** Process according to claim 6, **characterised in that** a supply pipe for the introduction of a gas stream is arranged immediately downstream of a cross-sectional widening.

**8.** Device for the production of mouldings containing a layer of polyurethane in shot operation, containing:

    a) storage containers and metering units for the reactive components polyol and isocyanate,
    b) a mixing head (2) for mixing the reactive components,
    c) connecting pipes from the storage containers to the metering units and from the metering units to the mixing head,
    d) a spray device (3, 3', 3", 3"', 3"") comprising a flow channel (11, 11', 11", 11"', 11"") connected hydraulically to the mixing head (2),
    **characterised in that** it further comprises

e) a first supply pipe (10a, 10a', 10a", 10a''') arranged in the inlet region of the flow channel for the introduction of a first gas stream into the flow channel,

f) a second supply pipe (10c, 10c', 10c", 10c''') arranged in the outlet region of the flow channel for the introduction of a second gas stream into the flow channel, wherein the distance 1 between the two positions being so chosen that the quotient of the distance 1 and the diameter d of the flow channel of the spray device

$$\left(\frac{l}{d}\right)_{\max}$$

is > 10, preferably > 15, particularly preferably > 20.

9. Device according to claim 8, **characterised in that** at least one further supply pipe (10b, 10b', 10b") for the introduction of a further gas stream is arranged in the flow channel (11, 11', 11", 11''', 11 '''') between the first supply pipe (10a, 10a', 10a", 10a''') and the second supply pipe (10c, 10c', 10c", 10c''').

10. Device according to one of claims 8 or 9, **characterised in that** the inlet openings of the supply pipes into the flow channel are arranged tangentially to the flow channel.

11. Device according to one of claims 8 to 10, **characterised in that** the flow channel consists of a plurality of cylindrical regions having different diameters.

12. Device according to claim 11, **characterised in that** the diameter of the flow channel increases stepwise in the direction towards the outlet opening.

13. Device according to claim 12, **characterised in that** a supply pipe for the introduction of a gas stream is arranged immediately downstream of a cross-sectional enlargement.

14. Device according to one of claims 8 to 13, **characterised in that** control members (14a, 14b, 14c) for adjusting the respective gas stream are arranged in the gas pipes (16a, 16b, 16c) to the supply pipes (10a, 10a', 10a", 10a''', 10b, 10b', 10b", 10c, 10c', 10c", 10c''').

## Revendications

1. Procédé de fabrication de pièces moulées contenant une couche de polyuréthane en mode de tir, selon lequel

a) les composants réactifs polyol et isocyanate sont tout d'abord mélangés dans une tête de mélange (2), puis

b) le mélange réactif formé à l'étape a) est conduit dans le canal d'écoulement (11, 11', 11", 11''', 11'''') d'un dispositif de pulvérisation (3, 3', 3", 3''', 3'''') et

c) le mélange réactif sortant du dispositif de pulvérisation est pulvérisé sur la surface d'un substrat (5) et durci sur celle-ci,

**caractérisé en ce que**

d) un courant gazeux est introduit dans le canal d'écoulement du dispositif de pulvérisation à au moins deux positions, la distance 1 entre ces deux positions étant choisie de manière à ce que le quotient de la distance 1 sur le diamètre d du canal d'écoulement du dispositif de pulvérisation $\left(\frac{l}{d}\right)_{\max}$ soit > 10, de préférence > 15, de manière particulièrement préférée > 20.

2. Procédé selon la revendication 1, **caractérisé en ce que** la première introduction de gaz a lieu par une première conduite d'alimentation (10a, 10a', 10a", 10a''') agencée dans la zone d'entrée du canal d'écoulement et la seconde introduction de gaz a lieu par une seconde conduite d'alimentation (10c, 10c', 10c", 10c''') agencée dans la zone de sortie du canal d'écoulement.

3. Procédé selon les revendications 1 et 2, **caractérisé en ce qu'**un courant gazeux est introduit dans le canal d'écoulement du dispositif de pulvérisation à plus de deux positions.

4. Procédé selon l'une quelconque des revendications 1 à 3, **caractérisé en ce que** l'introduction de gaz dans le canal d'écoulement (11, 11', 11'', 11''', 11'''') a lieu de manière tangentielle.

5. Procédé selon l'une quelconque des revendications 1 à 4, **caractérisé en ce que** le canal d'écoulement comprend plusieurs zones cylindriques de diamètres différents.

6. Procédé selon la revendication 5, **caractérisé en ce que** le diamètre du canal d'écoulement augmente graduellement dans la direction de l'ouverture de sortie.

7. Procédé selon la revendication 6, **caractérisé en ce qu'**une conduite d'alimentation pour l'introduction d'un courant gazeux est agencée directement après un élargissement de section.

8. Dispositif de fabrication de pièces moulées contenant une couche de polyuréthane en mode de tir, contenant :

   a) des contenants de stockage et des appareils de dosage pour les composants réactifs polyol et isocyanate,
   b) une tête de mélange (2) pour le mélange des composants réactifs,
   c) des conduites de raccordement entre les contenants de stockage et les appareils de dosage et entre les appareils de dosage et la tête de mélange,
   d) un dispositif de pulvérisation (3, 3', 3", 3''', 3"") contenant un canal d'écoulement (11, 11', 11", 11''', 11"") relié hydrauliquement avec la tête de mélange (2),
   **caractérisé en ce qu'**il contient également
   e) une première conduite d'alimentation (10a, 10a', 10a", 10a''') agencée dans la zone d'entrée du canal d'écoulement, pour l'introduction d'un premier courant gazeux dans le canal d'écoulement,
   f) une seconde conduite d'alimentation (10c, 10c', 10c", 10c''') agencée dans la zone de sortie du canal d'écoulement, pour l'introduction d'un second courant gazeux dans le canal d'écoulement, la distance 1 entre ces deux positions étant choisie de manière à ce que le quotient de la distance 1 sur le diamètre d du canal d'écoulement du dispositif de pulvérisation $\left(\dfrac{1}{d}\right)_{max}$ soit > 10, de préférence > 15, de manière particulièrement préférée > 20.

9. Dispositif selon la revendication 8, **caractérisé en ce qu'**au moins une autre conduite d'alimentation (10b, 10b', 10b") pour l'introduction d'un autre courant gazeux est agencée dans le canal d'écoulement (11, 11', 11", 11''', 11"") entre la première conduite d'alimentation (10a, 10a', 10a", 10a''') et la seconde conduite d'alimentation (10c, 10c', 10c", 10c''').

10. Dispositif selon l'une quelconque des revendications 8 ou 9, **caractérisé en ce que** les ouvertures d'entrée des conduites d'alimentation sont agencées dans le canal d'écoulement tangentiellement au canal d'écoulement.

11. Dispositif selon l'une quelconque des revendications 8 à 10, **caractérisé en ce que** le canal d'écoulement est constitué de plusieurs zones cylindriques de diamètres différents.

12. Dispositif selon la revendication 11, **caractérisé en ce que** le diamètre du canal d'écoulement augmente graduellement dans la direction de l'ouverture de sortie.

13. Dispositif selon la revendication 12, **caractérisé en ce qu'**une conduite d'alimentation pour l'introduction d'un courant gazeux est agencée directement après un élargissement de section.

14. Dispositif selon l'une quelconque des revendications 8 à 13, **caractérisé en ce que** des actionneurs (14a, 14b, 14c) pour l'ajustement du courant gazeux respectif sont agencés dans les conduites de gaz (16a, 16b, 16c) pour les conduites d'alimentation (10a, 10a', 10a", 10a''', 10b, 10b', 10b", 10c, 10c', 10c", 10c''').

Fig. 1

Fig. 2

_Fig. 4_

_Fig. 3_

A  B

1''''

2

3''''

5

20

Fig.5

EP 2 144 703 B1

**IN DER BESCHREIBUNG AUFGEFÜHRTE DOKUMENTE**

**In der Beschreibung aufgeführte Patentdokumente**

- US 2005133610 A
- EP 0303305 B1